# EUROPEAN PATENT APPLICATION

(11) **EP 4 063 690 A1**
(43) Date of publication of application: **28.09.2022**
(21) Application number: 21382233.1
(22) Date of filing: 23.03.2021
(51) Int. Cl.: F16H 25/20

(54) **ELECTRIC LINEAR ACTUATOR WITH A VARIABLE STROKE**

(71) Applicant: Regner Engineering, S.L.U., 17181 Aiguaviva (Girona) (ES)
(72) Inventor: GARCÍA GUTIÉRREZ, RAÚL, 17181 AIGUAVIVA (GIRONA) (ES); VILAMITJANA JUANHUIX, CARLA, 17181 AIGUAVIVA (GIRONA) (ES); GAITÁN PITRE, JORGE, 17181 AIGUAVIVA (GIRONA) (ES)
(74) Representative: Gallego Jiménez, José Fernando

(57) **Abstract**

The invention relates to a linear actuator with a stroke length regulation system allowing the stroke length of the linear actuator to be adjusted in a quick and simple manner.

## Description

### Technical field

The invention relates to the field of the linear actuators, and in particular, to a linear actuator which allows the stroke length thereof to be regulated.

### Background of the invention

A linear actuator is a mechatronics device producing movement in straight line from electrical energy. A motor, or geared motor, transforms electrical energy into circular movement. This movement causes a spindle which is inserted in a nut attached to a shaft to turn in order to convert the rotational movement of the motor into a linear movement of the shaft. Linear actuators are widely used in a range of applications to provide linear movement to loads, ranging from very lightweight to very heavy loads.

Some electric linear actuators can include a mechanism for detecting the end of stroke of the rectilinear movement of the shaft, both in extension (push action) and in backward movement (pull action). This mechanism allows the movement of the shaft to be limited, protecting the actuator itself against damage and premature wear which may be caused by the drive torque of the motor once the shaft reaches the ends of the stroke, that is, it has been completely extended or moved backward along the range of longitudinal movement thereof.

Said mechanisms, which are known for example from publications EP1101571A1 and EP1322876A1, can comprise switches arranged respectively at the start and at the end of the stroke of the shaft in a fixed manner, and a controller configured for detecting the activation of the switches.

The arrangement of the switches, and therefore the stroke length of the shaft, is typically adapted in mass produced linear actuators to the corresponding specific application. Linear actuators are typically manufactured based on one same model in different versions, for different predetermined stroke lengths. Therefore, a problem arises when stroke lengths differing from the predetermined stroke length expected in manufacturing methods are required. Sometimes the problem is solved by adapting the system in which the actuator is integrated, since an actuator suitable for that application cannot be installed, which takes up a great deal of time and is labour-intensive. In any case, advanced technical know-how is required to do any type of system redesign or adaptation of the actuator with respect to the system, which know-how does not fall within the scope of action of installation technicians.

The actuators are usually assembled by manual or semi-automated means given that actuators come in multiple versions and configurations which are not compatible with 100% automated production systems. As a result, they are mechatronic products made up of multiple parts, having a complex assembly, and with a high production cost. For this reason, assembly costs represent an important percentage of the total production expenses of an electric linear actuator, due to the complexity and the high number of the components thereof.

Therefore, there is a need to effectively solve the problems and drawbacks mentioned above.

### Brief description of the invention

An objective of the invention is to offer solutions to the mentioned problems and to provide an improved linear actuator which overcomes the mentioned drawbacks of the linear actuators known in the state of the art. In particular, one objective of the invention is to provide a linear actuator which incorporates an end of stroke detection system and allows the stroke length to be adjusted.

Consequently, said known linear actuators do not allow the stroke length to be adapted or regulated in a versatile manner, or if they do allow doing this, it is at the expense of having to disassemble many of the parts making up the actuator in order to perform the adjustment, which is a job that also requires a specialised technician. Therefore, there is a need to provide a linear actuator which allows the stroke length to be adapted or regulated in a manner that is simple and quick to implement, in order to thus grant greater versatility to one same linear actuator, whether it is to be adjusted to different applications, to different tolerances within one same application, or to compensate for variations due to wear throughout the service life thereof.

Said need is solved by a linear actuator according to the present invention according to claim 1 and by a linear actuator according to the present invention according to claim 8. The dependent claims define advantageous embodiments of the invention.

The linear actuator of the invention comprises an electric motor which is powered by a power supply circuit and a shaft is configured for performing a movement operated by the electric motor in a longitudinal direction, which corresponds to the forward or backward direction of the shaft. To that end, the linear actuator can comprise the necessary transmission mechanisms, in particular a mechanism for converting a rotational movement generated by the electric motor into the longitudinal movement of the shaft. The shaft is movable in the longitudinal direction along a stroke of the shaft between a first end of stroke and a second end of stroke.

The linear actuator of the invention further comprises a follower element which can be coupled or is coupled to the shaft, such that the follower element follows a movement of the shaft in the longitudinal direction. The follower element can be in particular stationary with respect to the shaft in the longitudinal direction, although it may present one or more degrees of freedom with respect to the shaft in other directions.

The follower element, which can be in particular a follower ring, can be coupled directly to the shaft, for example by means of a form fitting around the shaft itself, or it can be coupled to a feed nut which is, where appropriate, coupled to the shaft and configured for transforming the rotational movement of a spindle operated by the electric motor into a longitudinal movement of the shaft. The follower element can be coupled to the feed nut by means of form fitting or by means of another type of mechanical coupling.

The follower element comprises a coupling protrusion. The coupling protrusion can be, for example, a radial protrusion or projection extending in a direction perpendicular to the longitudinal direction.

The linear actuator of the invention further comprises a transmission element which is mobile in the longitudinal direction between a first limit position and a second limit position. Said limit positions can be positions in reference to the transmission element or to a part thereof, for example to a projection thereof which can move between the first and second limit position. The transmission element comprises a channel extending parallel to the longitudinal direction between a first channel end and a second channel end. Said channel is configured for housing the coupling protrusion of the follower element. The coupling protrusion can therefore move by sliding along the channel.

According to one aspect of the invention, the linear actuator further comprises a stroke regulator configured for regulating the stroke length of the shaft. The stroke regulator can be a part which can be coupled to the transmission element in an adjustable position, that is, in different positions, in particular in different positions along the channel. The stroke regulator is thereby configured for defining, according to the position in which it is fitted, that is, according to the position with respect to the transmission element in which the stroke regulator is arranged or fixed, a length that is free of the channel. The "length that is free" of the channel is understood as the length defined between one of the channel ends and the stroke regulator (or a part or prolongation thereof), along which the coupling protrusion of the follower element can move. That is, in the absence of the stroke regulator, the coupling protrusion could in principle move along the entire channel between the first channel end and the second channel end. However, the stroke regulator limits the length that is free of the channel, such that the range of motion in the longitudinal direction of the coupling protrusion, which is housed in the channel, is restricted and can only be displaced between a position determined by the stroke regulator and one of the channel ends.

Therefore, when, upon displacement of the shaft, and with it the follower element, in the longitudinal direction, the coupling protrusion of the follower element abuts against any of the channel ends or against the stroke regulator, the transmission element is driven (pushed) by the follower element, in particular by the coupling protrusion thereof, to also move in the longitudinal direction. While the coupling protrusion moves along the length that is free of the channel without abutment, the coupling element can remain stationary with respect to the shaft.

The transmission element therefore has two possible movement regimens:
In a first movement regimen, the follower element, in particular the coupling protrusion thereof, can move independently of the transmission element along the length that is free of the channel between one of the channel ends and the stroke regulator. That is, as long as the protrusion does not abut against any of the channel ends or against the stroke regulator, the follower element, moved by the shaft, can move without causing a corresponding movement of the transmission element. In other words, the transmission element can remain stationary with respect to the shaft and the follower element.

In a second movement regimen, the follower element, in particular the coupling protrusion thereof, transmits a longitudinal movement of the shaft to the transmission element when the coupling protrusion abuts against one or the other channel end or against the stroke regulator, driving (pushing) the transmission element towards the first or second limit position, as the case may be. That is, when the movement of the shaft in the longitudinal direction causes the coupling protrusion of the follower element to run the entire stroke length along the channel of the transmission element, the coupling protrusion starts to push the transmission element, which moves after that with the follower element and the shaft.

The electric linear actuator of the invention further comprises a control unit which is configured for deactivating the power supply circuit upon detecting that the transmission element reaches the first or second limit position. Consequently, when the transmission element is displaced by the coupling protrusion and reaches the first or second limit position, this has the consequence of the control unit deactivating the power supply circuit, and with it stopping the movement of the shaft. The meaning of "deactivating" the power supply circuit as it is used herein refers to carrying out the actions necessary for the motor to stop generating movement powered by the power supply circuit and it can comprise in particular disconnecting the power supply circuit from the motor and/or stopping the power supply circuit from generating energy.

Consequently, the ratio between the range of motion of the follower element with respect to the transmission element, which is defined by the length that is free of the channel, and the range of motion of the transmission element between the first limit position and the second limit position, determines the stroke length of the shaft. Therefore, the electric linear actuator of the invention allows regulating, by adjusting the position of the stroke regulator, the stroke length of the shaft in the longitudinal direction, in a simple manner and without the need for any complex intervention on the electromechanical components of the linear actuator.

It should be pointed out that with a single stroke regulator, it is possible to selectively limit the stroke length of the shaft in the forward or backward movement direction thereof, as desired. If the stroke regulator is arranged such that it is in the longitudinal direction between the first channel end (the rear end) and the coupling protrusion of the follower element, the coupling protrusion may move along the channel between the second channel end and the stroke regulator, whereby the stroke length of the shaft can be limited in the backward direction thereof. If the stroke regulator is arranged such that it is between the second channel end (front end) and the coupling protrusion of the follower element, the coupling protrusion may move along the channel between the first channel end and the stroke regulator, whereby the stroke length of the shaft can be limited in the forward direction thereof

In some embodiments, the linear actuator can comprise a first stroke regulator arranged in the longitudinal direction between the coupling protrusion and the first channel end and a second stroke regulator arranged in the longitudinal direction between the coupling protrusion and the second channel end. The coupling protrusion is thereby movable in the longitudinal direction along the channel between the first stroke regulator and the second stroke regulator. The stroke length of the shaft can thereby be limited both in the forward direction and in the backward direction.

A second aspect of the invention provides for omitting the stroke regulator. Therefore, the length that is free of the channel corresponds to the (absolute) length of the channel extending between the first channel end and the second channel end. In this case, the coupling protrusion can move along the channel between the first channel end and the second channel end and can abut against the first channel end or against the second channel end, then driving the transmission element towards the first or second limit position, respectively. In this type of linear actuator, although it is not possible to adjust the stroke length of the shaft later by means of a stroke regulator, it is possible to adjust the stroke length of the shaft in a design and manufacturing phase of the linear actuator in a simple manner by accordingly adapting the length of the channel, that is, the distance before the first channel end and the second channel end. The transmission element can, for example, be a part made of moulded plastic which allows being redesigned in a simple manner without major technical difficulties. Furthermore, in an electric linear actuator of this type that has already been manufactured, it is possible to modify the stroke length of the shaft in a relatively simple manner by only replacing the transmission element with a transmission element with a channel having the desired length, that is, the length corresponding to the stroke length of the shaft that may be required.

The coupling between the follower element and the shaft and/or the feed nut can be a non-rigid coupling, that is, it allows at least a certain degree of relative movement or tolerance between the follower element and the shaft and/or the feed nut. The coupling between the follower element and the shaft and/or the feed nut can tolerate in particular a relative rotation or rotational tolerance between the follower element and the shaft and/or the feed nut.

If, as in the case of linear actuators known in the state of the art, the coupling between the follower element and the shaft and/or the follower nut is strictly rigid, any non-linear movement of the follower element with respect to the shaft and/or the follower nut, for example due to repeated vibrations over time, can generate a dislodging of these elements and thus cause the end of stroke detection mechanism to fail, for example. Typically, the nut comprises an element that activates the switches when the nut reaches the end of stroke thereof. If the nut experiences accidental rotation, for example due to the action of another component or due to wear, the activating element can lose the capacity of contacting the switches, causing a detection failure. This can be prevented by means of the mentioned non-rigid coupling.

The control unit, which can for example be a printed circuit board, has the means necessary for detecting when the transmission element reaches one of the limit positions. To that end, the control unit can comprise or be connected to one or more sensors accordingly configured for detecting when the transmission element reaches the first or the second limit position. Such detectors can comprise switches, for example.

In some embodiments, the control unit can be connected to a first switch and/or to a second switch. The first switch is configured for being activated when the transmission element, in particular a projection thereof, reaches the first limit position and the control unit is configured for deactivating the power supply circuit when the first switch is activated. The first switch can be arranged in the first limit position and can be configured for being activated through contact by the transmission element, preferably by a projection thereof, when the transmission element reaches the first limit position. The second switch is configured for being activated when the transmission element, in particular said projection thereof, reaches the second limit position and the control unit is configured for deactivating the power supply circuit when the second switch is activated. The second switch can be arranged in the second limit position and can be configured for being activated through contact by the transmission element, preferably by said projection thereof, when the transmission element reaches the second limit position.

The linear actuator of the invention can be configured for operating with different maximum stroke lengths, that is, with different stroke lengths not limited by any stroke regulator, for example stroke lengths of between 10 mm and 300 mm, in particular of 16mm, 50 mm, 75 mm, 100 mm, 140 mm, 176 mm or 260 mm.

In the linear actuator of the invention, the shaft can have a length of 10 to 300 mm, preferably of 70 mm to 260 mm, in particular for example of 70 mm, 80 mm, 100 mm, 140 mm or 260 mm.

The linear actuator of the invention can be configured for moving the shaft with a maximum force of 100 N to 5000 N, in particular for example of 5000 N, 3000 N, 2500 N, 1000 N or 500 N.

The linear actuator of the invention can be configured for moving the shaft with a maximum linear movement velocity of the shaft of 1 mm/s to 15 mm/s, in particular for example of 1.8 mm/s, 3.6 mm/s, 6 mm/s or 10 mm/s.

The invention also relates to a system comprising a load to be linearly displaced and at least one linear actuator according to any of the aspects and embodiments of the present invention coupled to the load.

### Brief description of the figures

The features and advantages of the invention are made apparent by means of the detailed description below in conjunction with the different figures in which reference characters identify corresponding elements in different figures. Corresponding elements can also be referenced using different characters.
- FIG. 1 shows an isometric view of a linear actuator according to some embodiments of the invention.
- FIG. 2 shows an exploded isometric view of the linear actuator of FIG. 1.
- FIG. 3 shows a shell according to some embodiments of the invention.
- FIG. 4 shows a detailed view of an end of stroke detection system of a linear actuator according to some embodiments of the invention.
- FIG. 5 shows in detail part of the detection system of a linear actuator according to some embodiments of the invention. FIG. 5A shows the rear end of a feed nut of the linear actuator. FIG. 5B shows a follower element configured for being coupled to the feed nut.
- FIG. 6 shows a transmission element of a linear actuator according to some embodiments of the invention. FIG. 6A shows the upper face of the transmission element while FIG. 6B shows the lower face.
- FIG. 7 shows part of the detection system, in particular a control unit of a linear actuator according to some embodiments of the invention. FIG. 7A shows the lower face of the transmission element while FIG. 7B shows the upper face.
- FIG. 8 is another view of the end of stroke detection system of FIG. 4, in which the follower element of FIG. 5B is coupled to the feed nut of FIG. 5A, and the coupled element of FIG. 5B is coupled to the transmission element.
- FIG. 9 shows an exploded view of a linear actuator according to some embodiments of the invention which incorporates a regulation system configured for regulating the stroke length of the shaft.
- FIG. 10 shows the linear actuator of FIG. 9 assembled and without the cover of the shell, allowing the stroke regulator of the detection system to be accessed.
- FIG. 11 shows the guide profile of the linear actuator of FIG. 9.
- FIG. 12 shows a stroke regulator of the regulation system of the linear actuator of FIG. 9 according to some embodiments of the invention.
- FIG. 13 shows part of the regulation system of the linear actuator of FIG. 9: FIG. 13A shows a top view and FIG. 13B shows a bottom view of the stroke regulator coupled to the transmission element.
- FIG. 14 shows part of the regulation system of the linear actuator of FIG. 9: the stroke regulator and transmission element assembled on the shaft.
- FIG. 15 shows the components of the regulation system housed inside the actuator profile of the linear actuator of FIG. 9.
- FIG. 16 and FIG. 17 show section views of the maximum position and the minimum position for the regulation of the backward movement stroke length of the linear actuator of FIG. 9.
- FIG. 18A shows the regulation system configured with a single stroke regulator for defining the stop in the backward direction according to some embodiments of the invention.
- FIG. 18B shows the regulation system configured with a single stroke regulator for defining the stop in the forward direction according to some embodiments of the invention.
- FIG. 18C shows the regulation system according to some embodiments of the invention configured with two stroke regulators for defining the stop in both forward and backward directions, wherein the rulers for precision adjustments are also seen.

### Detailed description of preferred embodiments of the invention

In order to help understand the principles of the invention, reference will be made below to specific preferred embodiments illustrated in the drawings, and a specific vocabulary will be used to describe them. However, it is understood that this does not intend to limit the scope of the invention, since additional alterations and modifications are contemplated in the illustrated apparatus and any implementation of the principles of the invention, as illustrated herein, as would normally occur in the present or in the future to a person skilled in the art within the scope defined by the claims.

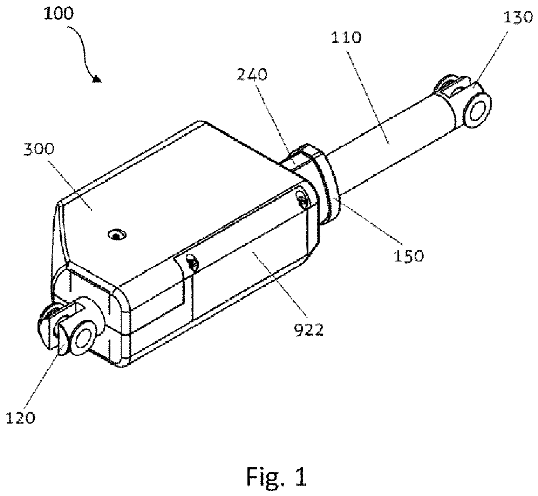

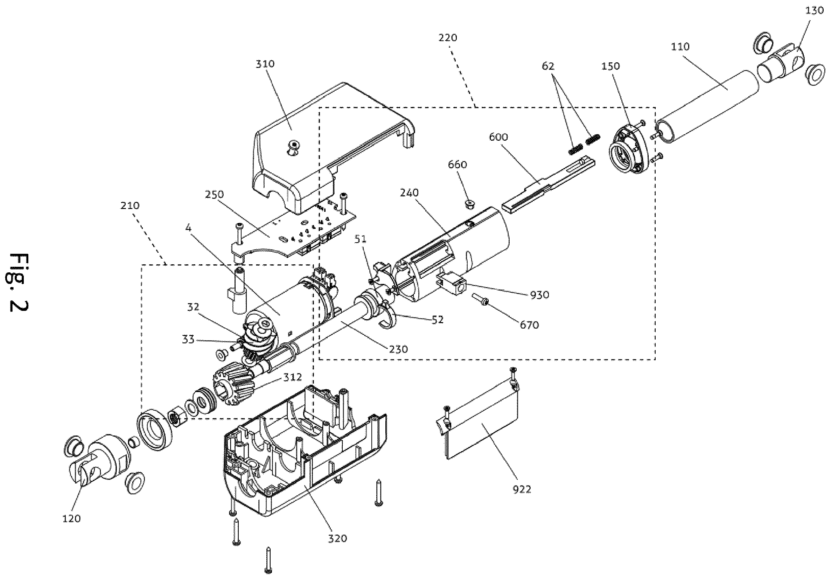

FIG. 1 shows an isometric view of a linear actuator 100 according to some embodiments of the invention and FIG. 2 shows an exploded isometric view of the linear actuator 100, both implementing several improvements according to the present invention.

The linear actuator 100 comprises an electric motor 4 generating a rotational movement of a worm screw 32. The linear actuator 100 further comprises a control unit 250 controlling the electric motor 4. The control unit 250 can comprise or be a printed circuit board.

In the embodiments shown, the linear actuator further comprises a first mechanism 210 configured for converting the rotational movement of the electric motor into a linear movement, and a second mechanism 220 configured for using said linear movement provided by the first mechanism 210 to linearly displace a shaft 110. At the rear end thereof, the linear actuator can comprise fastening means 120 for fastening the actuator (rear clevis), and at the front end thereof, the actuator can comprise connecting means 130 (front clevis), by means of which a load can be connected to the actuator by means of the shaft.

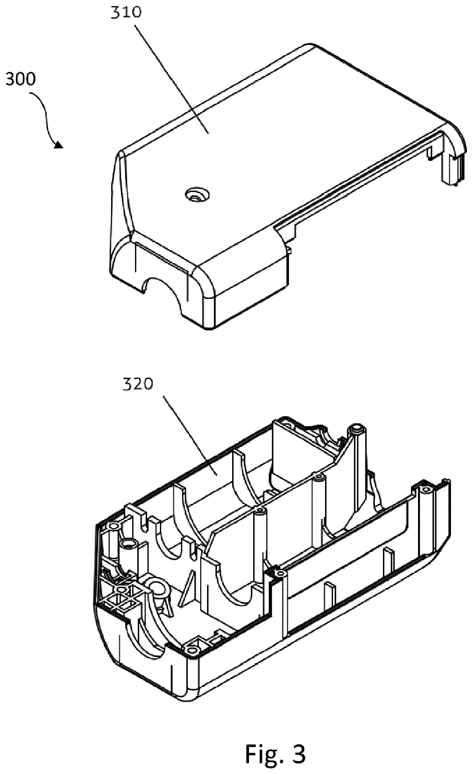

In the embodiment shown, the first mechanism 210 can comprise a spur gear 312 with worm wheel coupled to a spindle 230. The first mechanism 210 can further comprise a worm screw 33 arranged in an inclined manner between the spur gear 312 and the worm screw 32 of the electric motor 4, the worm screw 33 engaging with the spur gear 312 and with the worm screw 32 of the electric motor 4, to transmit the rotational movement of the worm screw 32 of the electric motor 4 to the spindle 230. The spindle 230 can be fastened to the lower face of the shell 300 (see FIG. 3), for example to the lower half-shell 320.

The shaft 110 can be coupled, particularly in an integral manner, to a feed nut 51, having an inner thread corresponding to an outer threaded profile of the spindle 230, such that a rotational movement of the spindle 230 operated by the electric motor 4, in particular transmitted by the first mechanism 210, causes a translational movement of the feed nut 51 with respect to the spindle 230, and therefore a longitudinal (rectilinear) movement of the shaft 110, since the shaft is coupled integrally to the feed nut 51. As the thread of the feed nut 51 is screwed on or unscrewed from the spindle 230, the shaft 110 moves backward or forward in the movement direction thereof, that is, in the longitudinal direction.

The feed nut 51 can be housed inside a guide profile 240. The guide profile 240 can be closed by an outer cover 150 of the guide profile. The feed nut 51 has the possibility of being coupled to an end of the shaft 110, in particular a rear end of the shaft 110.

The linear actuator comprises a shell 300 which can house the functional elements thereof or a part of same, in particular the electric motor 4, the control unit 250, and/or the guide profile 240, completely or partially. The shell 300 can comprise at least two parts or half-shells. FIG. 3 shows the shell 300 according to an embodiment of the invention, comprising an upper half-shell 310 and a lower half-shell 320.

The shell 300, which is formed by the two half-shells 310 and 320, can contain the supports and cavities necessary for installing the different components of the linear actuator therein. The upper half-shell 310 and lower half-shell 320 can be coupled to one another to form the shell 300 such that the intersecting or attachment profile thereof is arranged in a plane essentially parallel to the longitudinal direction of the shaft 110 of the linear actuator 100, that is, arranged vertically, being able to act both as a housing and as a support for the internal fixed and mobile parts. In other words, the plane of the two half-shells 310, 320 of the shell 300 is parallel to the movement direction of the linear actuator.

As a result, the shell 300 can perform at least two functions. The first is to serve as a shell for housing all the components of the linear actuator, and the second is to serve as a non-detachable fixing support, in particular for all the parts of the gear mechanism, ensuring that all the parts are located correctly with respect to one another, and also preventing minor displacement movements when subjected to continuous vibrations. It can perform at least these two functions with the minimum number of parts, since it does not need any additional support for the gear box, even being able to dispense with a gear mechanism box, reducing the overall weight and facilitating the assembly.

Therefore the design of the shell 300 is advantageous in terms of production and assembly because no particular box is required for the gear mechanism and because of the ease in assembly due to the reduced number of parts making up the shell and the arrangement thereof, which allow the different components inside the actuator to be put in place during assembly in a simple manner.

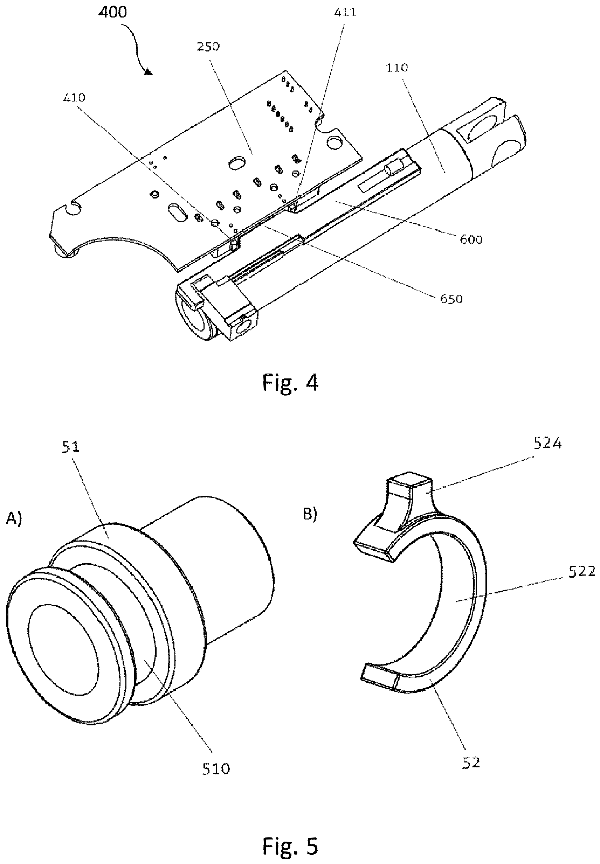

FIG. 4 shows an end of stroke detection system 400 of a linear actuator according to some embodiments of the invention. The detection system has the possibility of being coupled, particularly in a non-fixed manner, to the shaft 110. That is, the elements of the detection system 400 and the shaft 110 can be structurally independent and move independently of one another, but there may be interaction, in particular mechanical interaction, between them and others by means of the coupling of the detection system 400 to the shaft 110.

The detection system 400 comprises a follower element 52 (not visible in FIG. 4) which can be coupled to the shaft 110, preferably by means of the feed nut 51 (not visible in FIG. 4) of the actuator. The follower element 52 can be coupled directly to the shaft 110. However, it is also possible, like in the embodiments shown, for the follower element to be coupled to the shaft by means of the feed nut 51, the feed nut 51 being coupled to the shaft, particularly in an integral manner, and the follower element 52 coupled to the feed nut 51.

The control unit 250 is connected to at least two end of stroke switches 411, 410, the switch 411 in particular being a front or stop switch 411 in the forward direction of the shaft 110 and the switch 410 in particular being a rear or stop switch 410 in the backward direction of the shaft 110. In some embodiments, the control unit 250, which can be a printed circuit board, can comprise the switches 411, 410 which can be assembled on the control unit 250.

The transmission element 600 is configured for being moved with shaft 110, in particular with the feed nut 51, when it is driven by the follower element 52, when the follower element 52 abuts as described above. When this occurs, the transmission element moves in the longitudinal direction driven by the follower element until a projection 650 thereof, which is arranged between both switches 411, 410, activates by contact one of the switches 411, 410. All these elements can be assembled on the lower half-shell 320 of the shell 300. When the switch 411 or 410 is activated, the control unit 250 stops the power supply of the motor 4 and with it the movement of the shaft 110.

FIG. 5A shows the rear end of the feed nut 51 which can be coupled to the shaft 110 according to some embodiments of the invention. The feed nut 51 has a coupling feature for allowing a coupling of the follower element 52. In the embodiment shown, the coupling feature is a recess 510 going around the circumference of the feed nut 51.

FIG. 5B shows a follower element 52 according to some embodiments of the invention, configured for being coupled to the shaft 110, in particular by means of the feed nut 51, such that the follower element 52 follows a longitudinal movement of the shaft 110.

In the embodiment shown, the follower element 52 has a hoop or ring-shaped section 522 configured for being coupled by form fitting in the recess 510 of the feed nut 51. The follower element 52 additionally comprises a coupling protrusion 524 configured for being coupled to the transmission element 600, and thus transmitting the movement of the shaft 110 along the forward direction thereof to the transmission element 600, causing the transmission element 600 to move in the same forward direction. The protrusion 524 can in particular extend or project in a direction substantially perpendicular to the longitudinal direction of the shaft 110.

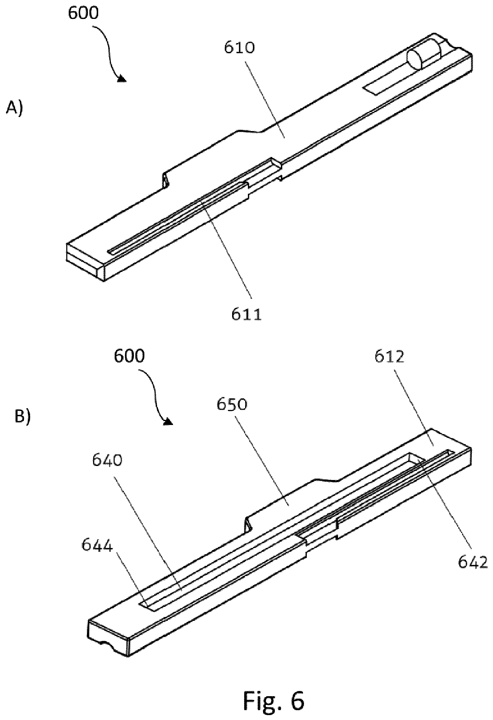

As shown in FIG. 6, the transmission element 600 can be a substantially flat and elongated part, with two main faces 610 and 612. FIG. 6A shows the upper face 610 of a transmission element 600 according to some embodiments of the invention, while FIG. 6B shows the lower face 612.

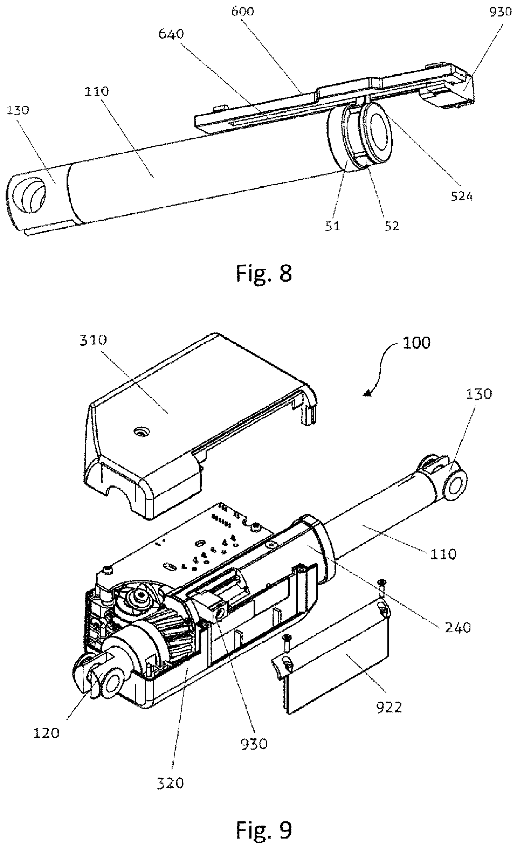

On the lower face thereof, the transmission element comprises a channel 640 extending substantially in parallel to the forward direction of the shaft (the longitudinal direction) and is configured for housing the protrusion 524 of the follower element 52. In the assembled state, the protrusion 524 is housed inside the channel 640 of the transmission element 600, such that it can move freely in the longitudinal direction of the channel 640, that is, parallel to the forward direction of the shaft 110, as seen in FIG. 8.

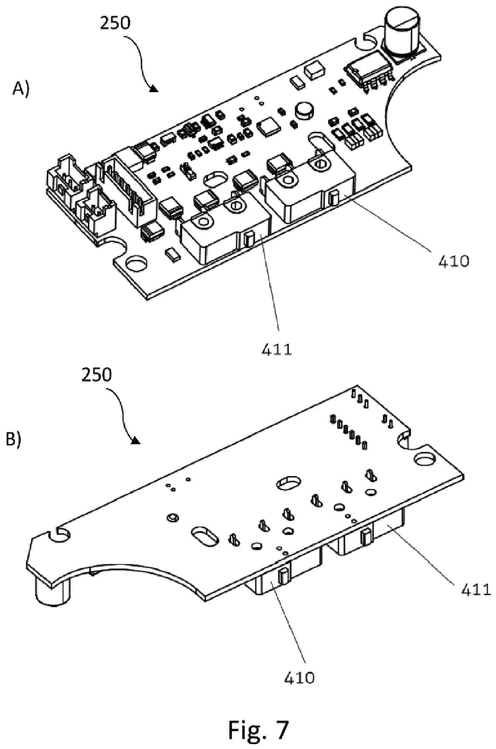

By moving forward longitudinally when being screwed on or unscrewed from the spindle 230, the feed nut 51 causes the follower element 52 to move forward, so the protrusion 524 is longitudinally displaced along the channel 640 until reaching an end of the channel 640. At that time, the protrusion 524 abuts for example against the front channel end 644 of the channel 640, thereby transmitting the movement of the shaft 110 in the forward direction to the transmission element 600, and causing a corresponding movement of the transmission element 600, which can activate the switch 411 (see FIG. 7).

Conversely, when the nut 51 moves backward longitudinally, the protrusion 524 is longitudinally displaced in the reverse direction along the channel 640 until reaching the other end of the channel 640. At that time, the protrusion 524 abuts for example against the rear channel end 642 of the channel 640, thereby transmitting the movement of the shaft 110 in the backward direction to the transmission element 600, and causing a corresponding movement of the transmission element 600, which can activate the switch 410 (see FIG. 7).

In the embodiments of the invention in which the stroke regulator is omitted, the transmission element 600 is configured for being longitudinally displaced under the influence of the follower element 52, when the protrusion 524 abuts against any of the channel ends 644, 642 of the channel 640, and for thus activating, for example by mechanical contact, one of the switches 411, 410, as the case may be. In this case, the follower element 52 can move in the longitudinal direction in absolute terms, for example using the shell 300 as a reference, along a range of motion corresponding to the sum of the length of the channel 640, that is, the distance between the longitudinal ends 642, 644 thereof, and the distance between the switches 410, 411.

In some embodiments, the transmission element 600 comprises, for example on one of the lateral sides thereof as shown in FIG. 6, a projection 650, for example in the form of a tooth or cam. The projection 650 is configured for activating the switches 411, 410 upon contacting same, when propelled by the follower element 52, either when moving forward or backward. The projection 650 can therefore move between the switches 410, 411.

When the shaft 110 moves in the forward direction, that is, in the direction from the rear end thereof corresponding to the position of the electric motor 4 towards the front end thereof opposite the position of the electric motor 4, it moves until the projection 650 of the transmission element 600 abuts against the switch 411 and activates it. Once the switch 411 has been activated, the control unit 250 interrupts the power supply of the electric motor 4 and with it the forward movement of the shaft. Likewise, when the shaft 110 moves in the backward direction, that is, in the direction from the front end thereof corresponding to the position opposite the position of the electric motor 4 towards the rear end thereof corresponding to the position of the electric motor 4, it moves until the projection 650 of the transmission element 600 abuts against the switch 410 and activates it. Once the switch 410 has been activated, the control unit 250 interrupts the power supply of the electric motor 4 and with it the backward movement of the shaft.

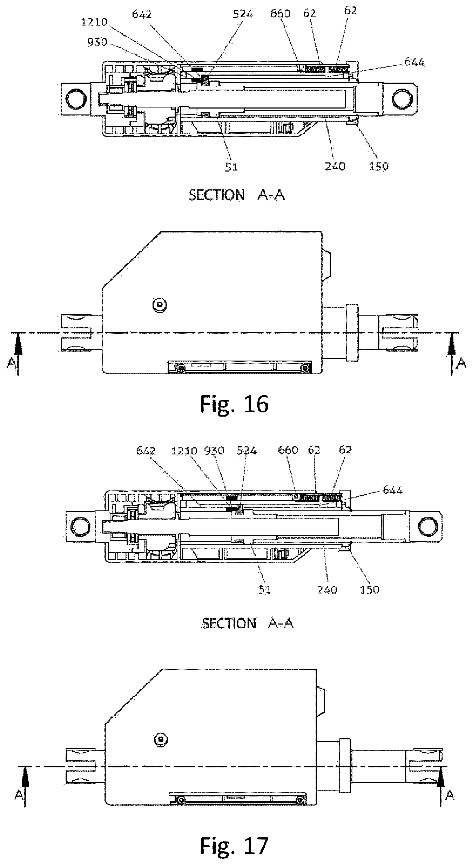

The transmission element 600 can further comprise a stop 660 for contacting at least one spring system (not shown in FIG. 6) configured for pre-tensioning the transmission element 600 such that, in the absence of the transmission of movement by the follower element 52, the spring forces the transmission element 600 to return to the neutral or starting position thereof, once again ready for detecting movement of the shaft 110, whether in the forward or backward direction. In said neutral position, the transmission element 600, in particular the projection 660, is located in an intermediate position between the switch 411 and the switch 410. The position of the switch 411 corresponds to the first limit position and the position of the switch 410 corresponds to the second limit position. The neutral position can be the midpoint between the channel ends of the stroke, and the transmission element 600, in particular the projection 650, returns to this point when it is not subjected to any force by the shaft 110 and/or the feed nut 51. The spring system can comprise one or more, in particular two, springs 62 (see FIG. 17) located inside the guide profile 240 which are compressed in either direction, in particular against an outer cover 150 of the profile and the cap of the springs, depending on the direction of the movement of the shaft 110, whether forward or backward.

FIG. 7 shows the control unit 250 on both faces. FIG. 7A shows the lower face of the transmission element while FIG. 7B shows the upper face (see e.g. FIGS. 2 and 4). In the embodiment shown, the switches 411 and 410 are integrated in the control unit. When the first switch 411 is activated when operated by the transmission element 600, in particular by the projection 650, the control unit 250 interrupts/deactivates an electrical circuit supplying power to the electric motor 4, stopping the driving action of the electric motor 4 and causing the shaft 110 to stop moving forward. A second switch 410 detects the other end of stroke of the shaft 110 and/or of the feed nut 51, such that when it is activated, it interrupts/deactivates the circuit supplying power to the electric motor 4, causing the shaft 110 to stop moving backward.

The coupling between the follower element 52 and the transmission element 600 allows the shaft 110 and/or the feed nut 51 to be able to turn and rotate about the axis thereof without losing the function of transmitting the linear movement to the transmission element 600, and therefore the detection of the ends of stroke. By allowing a rotational movement of the shaft 110 and/or of the feed nut 51 about the longitudinal axis, that is, around the forward direction of the shaft 110, the follower element 51 adds a certain tolerance against wear and vibrations, since, during normal use, the spindle 230 tends to turn or pivot to one side and the other. The linear actuator according to the invention ensures that despite these circumstances, the ability to detect the end of stroke is not lost. This represents a considerable improvement with respect to existing systems which, under the same circumstances, end up being disassembled and uncoupled, causing failures in the detection system, since all the components thereof are assembled in a very tight manner, allowing no variation in movement or tolerance whatsoever.

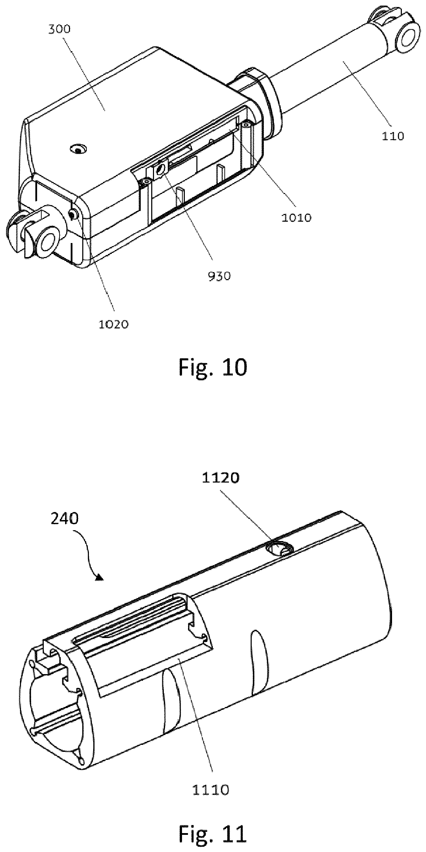

FIG. 9 and 10 show a linear actuator 100 including a stroke regulator 930. The linear actuator 100 can comprise components corresponding to all or some of the components described above for the embodiments shown in FIG. 1 to 8, which will not be described in detail again, although the linear actuator 100 can comprise some additional components.

The shell 300 comprises a lower half-shell 320 and an upper half-shell 310 and further comprises an aperture cover 922. In FIG. 1, the shell 300 can be seen completely assembled, with the cover 922 in place, while FIG. 9 shows the exploded view.

The aperture 1010 of the shell 300 allows accessing at least one stroke regulator 930 configured for regulating the stroke length of the shaft 110, in particular regulating the length that is free of the channel 640 of the transmission element 600. In some embodiments, the stroke regulator 930 can be a part which can be movably coupled to the transmission element 600 in different longitudinal positions along the channel 640, such that the stroke regulator 930 forms an intermediate stop arranged between the ends 644 and 642 of the channel 640, thus limiting the length that is free of the channel, that is, the distance the protrusion 524 can travel along the channel before abutting against any of the channel ends 644, 642 or with the stroke regulator 930 itself, then causing the movement of the transmission element 600 towards the first or second limit position thereof, as the case may be. According to the position in which the stroke regulator 930 is fitted, the distance that the protrusion 524 can travel through the channel 640 before abutting is therefore selectively limited more or less.

In this case, the follower element 52 can move in the longitudinal direction in absolute terms, for example using the shell 300 as a reference, along a range of motion corresponding to the sum of the length that is free of the channel 640, that is, the distance along the channel 640 between the stroke regulator 930 and the first or second longitudinal ends 642 or 644 as the case may be, and the distance between the switches 410, 411, along which the projection 650 can move.

In FIG. 10, the linear actuator can be seen without the cover 922 of the shell 300, allowing a user to access the stroke regulator 930 through the aperture 1010 from outside the shell 300.

FIG. 11 shows the guide profile 240 of the actuator, also configured with an aperture 1110 corresponding to the aperture 1010 of the shell 300, for allowing access to the stroke regulator 930, which is coupled to the transmission element 600 housed inside the guide profile 240. The guide profile 240 can additionally comprise an opening 1120 through which there is placed a cap acting by way of an internal stop 660 of the transmission element 600 for a spring system, as described above.

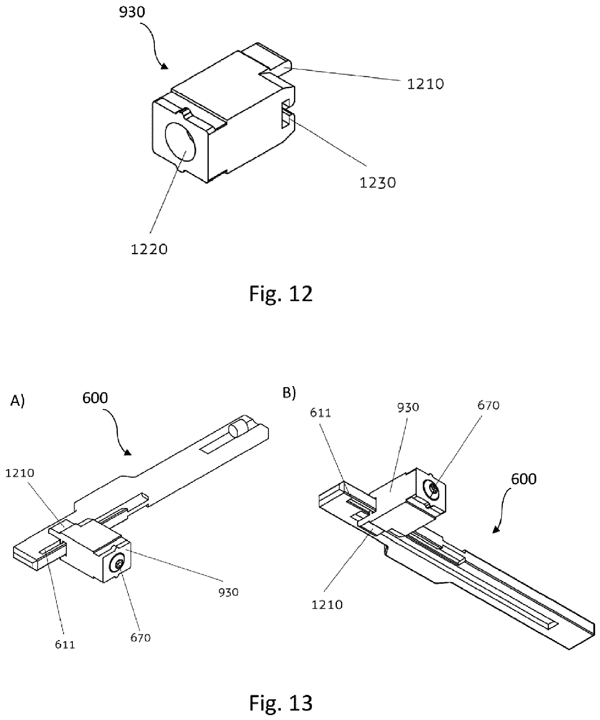

FIG. 12 shows a stroke regulator 930 according to some embodiments of the invention, which is configured as a part having a protrusion 1210, for example on a first side, and an opening 1220, for example on the other side which can be opposite the first side, the opening 1220 being configured for receiving and/or housing a locking device 670, such as a screw. On the same side as the protrusion, the stroke regulator comprises guides 1230 configured for being coupled to the transmission element 600, for example one or more corresponding tracks 611 which are configured in the transmission element 600, and which allow a sliding of the stroke regulator 930 with respect to the transmission element 600, in particular along the channel 640. The locking device 670 can lock the position of the stroke regulator 930 on the transmission element 600.

As shown in FIG. 6, the one or more tracks 611 and the channel 640 can be formed on one of the opposite faces of the transmission element 600 or on both, where the one or more tracks 611 can be formed by both faces of the transmission element while the channel 640 is formed on one of the two opposite faces of the transmission element or vice versa. In the example shown in FIG. 6, the track 611 is formed on both faces of the transmission element 600 and the channel 640 is formed on one of the faces of the transmission element 600.

In FIG. 6, the transmission element 600 comprises a track 611 configured for being coupled with the guides 1230 of the stroke regulator 930 for allowing a guided sliding thereof. This allows the stroke regulator 930 to be assembled and disassembled in a quick and easy manner, allowing for the optimised manufacture of actuators with or without a regulation system 930.

FIG. 13 shows the stroke regulator 930 assembled in the transmission element 600, before it is assembled inside the guide profile 240 (top and bottom view). The stroke regulator 930 is fixed in a position with respect to the transmission element 600 by the locking device 670. FIG. 13A shows a top view and FIG. 13B shows a bottom view of the stroke regulator 930 coupled to the transmission element 600.

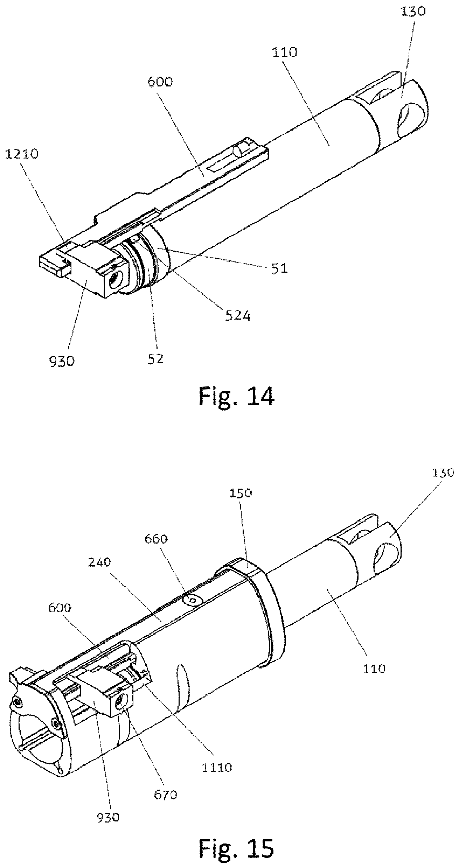

In FIG. 14, the stroke regulator and transmission element can be seen assembled on the shaft 110, and in FIG. 15, all these components can be seen housed inside the guide profile 240.

FIG. 16 shows a section view of the linear actuator 100 along section line AA of a configuration in which the stroke regulator 930 is arranged between the protrusion 524 and the first channel end 642 (rear end, see FIG. 6) to provide a minimum limitation of the stroke length in the backward direction. In this configuration, the stroke regulator 930 is fixed at a back or rear end of the track 611 (an end of the track 611 oriented towards the first channel end 642), such that the stroke length is only limited by a length corresponding to the extension of the protrusion 1210 of the stroke regulator 930 along the channel 640. The protrusion 1210 of the stroke regulator 930 acts as a stop for the protrusion 524 of the follower element 52 instead of the first channel end 642. In this configuration, the protrusion 524 is arranged between the second channel end 644 (front end of the channel) and the stroke regulator 930.

The closer the stroke regulator 930 is arranged to the second channel end 644, the more limited is the stroke length, given that the position after which the protrusion 524 will drive the transmission element when abutting against the protrusion 1210 of the stroke regulator 930 for the transmission element 600 to activate the switch 410 is moved up.

FIG. 17 shows the section view of the linear actuator 100 along section line AA of a configuration in which the stroke regulator 930 is also arranged between the protrusion 524 and the first channel end 642 (rear end, see FIG. 6) but in this case to provide a maximum limitation of the stroke length in the backward direction. In this configuration, the stroke regulator 930 is fixed at an anterior or front end of the track 611 (an end of the track 611 oriented towards the second channel end 644), such that the stroke length is limited as much as is allowed by the guide element 600, that is, by a length corresponding to the extension of the track 611 in the longitudinal direction. The protrusion 1210 of the stroke regulator 930 acts as a stop for the protrusion 524 of the follower element 52 instead of the first channel end 642.

The configurations of FIG. 16 and 17 can be reproduced in a similar manner to limit the stroke length, in the forward direction thereof, either to a minimum extent, to a maximum extent, or to an intermediate extent.

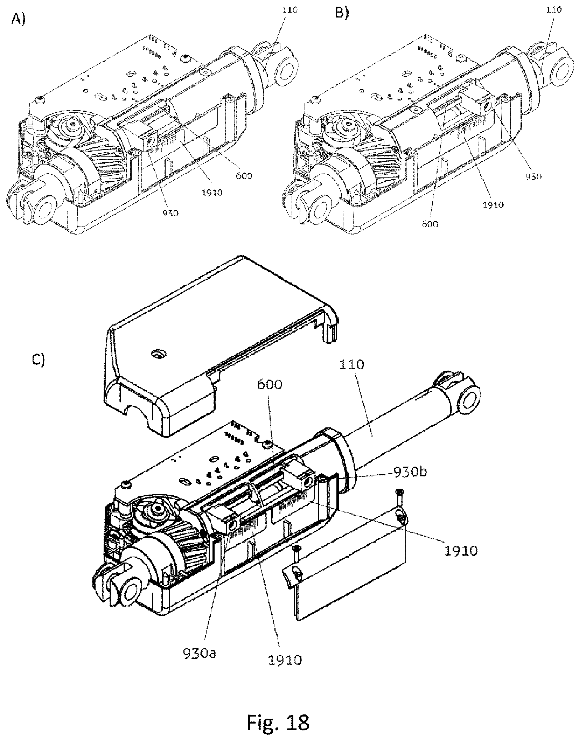

FIG. 18A shows an embodiment in which the regulation system is configured with a single stroke regulator 930 for defining a stop in the channel 640 of the transmission element 600 in the backward movement direction of the shaft 110. FIG. 18B shows an embodiment in which the regulation system is configured with a single stroke regulator 930 for defining a stop in the channel 640 of the transmission element 600 in the forward movement direction of the shaft 110. FIG. 18C shows an embodiment in which the regulation system is configured with two stroke regulators 930a, 930b for defining stops in the channel 640 of the transmission element 600 in both forward and backward movement directions of the shaft 110. It can also be seen that the lower shell has configured, for each of the stroke regulators 930a, 930b, a ruler 1910 (for example, of 22 mm), to help position the stroke regulator element in the desired point and fix it, in particular with respect to a reference position defined by the ruler 1910. As seen in FIG. 18A and 18B, the ruler 1910 can also be used with a single stroke regulator 930.

In some embodiments, the regulation system can additionally comprise a fine adjustment system 1020, as seen in FIG. 10. The fine adjustment system allows a displacement of the stroke regulator 930 in very small steps, such that the stroke length can be defined in steps of a predefined incremental length, where said predefined incremental length can be between 0.1 mm and 1 mm, preferably between 0.1 mm and 0.5 mm, or even less. The fine adjustment system is configured on the outside of the shell 300, such that it is not necessary to uncover the shell to operate the fine adjustment system. This configuration is conceived, for example, for being able to perform, at the time of installing the actuator, the initial adjustment by means of the normal regulation system (without the cover 922 of the shell 300). Once in use, and whenever it is necessary to carry out fine adjustments, for example due to wear of the parts, this can easily and quickly be carried out by a user, without even needing to disassemble the cover 922 from the shell 300.

Advantageously, the linear actuator of the invention allows the stops of the stroke of the shaft to be modified without directly modifying the range of motion of the transmission element or the positions of the switches 410, 411. Having to disassemble many of the parts and the user having to directly manipulate the internal components is thereby prevented. It is an intuitive regulation system and does not require complex operations.

Although preferred exemplary embodiments are illustrated in the drawings and described in detail in the preceding description, such embodiments must be considered as being purely exemplary and not limiting of the invention. In this respect, it should be pointed out that only some preferred exemplary embodiments are illustrated and described in detail, and all those variations and modifications which may be comprised at present or in the future within the scope of protection of the invention as defined in the claims must be protected.

## Claims

1. An electric linear actuator comprising:
an electric motor (4) powered by a power supply circuit;
a mobile shaft (110) configured for performing a movement operated by the electric motor (4) in a longitudinal direction, the shaft (110) being movable in the longitudinal direction;
a follower element (52) coupled to the shaft (110) such that the follower element (52) follows a movement of the shaft (110) in the longitudinal direction, the follower element (52) comprising a coupling protrusion (524);
a transmission element (600) which is mobile in the longitudinal direction between a first limit position and a second limit position, the transmission element (600) comprising a channel (640) extending parallel to the longitudinal direction between a first channel end (642) and a second channel end (644);
a stroke regulator (930) configured for regulating the stroke length of the shaft (110), the stroke regulator (930) being a part that can be coupled to the transmission element (600) in an adjustable position and configured for defining, according to said adjustable position, a length that is free of the channel (640) between one of the channel ends (644, 642) and the stroke regulator (930);
wherein the channel (640) is configured for housing the coupling protrusion (524), such that:
- the follower element (52) is movable independently of the transmission element (600) along the length that is free of the channel (640) between one of the channel ends (644, 642) and the stroke regulator (930); and
- the follower element (52) transmits a longitudinal movement of the shaft (110) to the transmission element (600) when the coupling protrusion (524) abuts against one or the other channel end (644, 642) or against the stroke regulator (930), driving the transmission element towards the first or second limit position, respectively; and
a control unit (250) configured for deactivating the power supply circuit upon detecting that the transmission element (600) reaches the first or second limit position.

2. The actuator according to claim 1, wherein the stroke regulator (930) is a part having a protrusion (1210) and an opening (1220), the opening (1220) being configured for receiving and/or housing a locking device (670) configured for locking the position of the stroke regulator (930) in the adjustable position on the transmission element (600), in particular along the channel (640).

3. The linear actuator according to claim 2, wherein the stroke regulator (930) comprises, preferably on the same side as the protrusion (1210), guides (1230) configured for allowing a guided sliding of the stroke regulator (930) with respect to the transmission element (600), in particular by means of one or more corresponding tracks (611) configured in the transmission element (600) which can be coupled with the guides (1230).

4. The linear actuator according to any of the preceding claims, wherein the regulation system comprises a stroke regulator (930), preferably only one, the coupling protrusion (524) being arranged in the longitudinal direction:
- between the second channel end (644) and the stroke regulator (930) and being movable between same, the stroke regulator (930) thus limiting the stroke of the shaft (110) in the backward direction thereof; or
- between the first channel end (642) and the stroke regulator (930) and being movable between same, the stroke regulator (930) thus limiting the stroke of the shaft (110) in the forward direction thereof.

5. The linear actuator according to any of the preceding claims, wherein the regulation system comprises:
a first stroke regulator (930a) arranged in the longitudinal direction between the coupling protrusion (524) and the first channel end (642), and
a second stroke regulator (930b) arranged in the longitudinal direction between the coupling protrusion (524) and the second channel end (644),
the coupling protrusion (524) being movable in the longitudinal direction along the channel (640) between the first stroke regulator (930a) and the second stroke regulator (930b).

6. The linear actuator according to any of the preceding claims, further comprising a ruler (1910) configured for adjusting the position of the stroke regulator (930) with respect to a reference position.

7. The linear actuator according to any of the preceding claims, further comprising a fine adjustment system (1020) allowing a displacement of the stroke regulator (930) in the longitudinal direction in steps of a predefined incremental length, where said predefined incremental length can preferably be between 0.1 mm and 1 mm, more preferably between 0.1 mm and 0.5 mm.

8. An electric linear actuator comprising:
an electric motor (4) powered by a power supply circuit;
a mobile shaft (110) configured for performing a movement operated by the electric motor (4) in a longitudinal direction, the shaft (110) being movable in the longitudinal direction;
a follower element (52) coupled to the shaft (110) such that the follower element (52) follows a movement of the shaft (110) in the longitudinal direction, the follower element (52) comprising a coupling protrusion (524);
a transmission element (600) which is mobile in the longitudinal direction between a first limit position and a second limit position, the transmission element (600) comprising a channel (640) extending parallel to the longitudinal direction between a first channel end (642) and a second channel end (644);
wherein the channel (640) is configured for housing the coupling protrusion (524), such that:
- the follower element (52) is movable independently of the transmission element (600) along the length of the channel (640) between the first channel end (642) and the second channel end (644); and
- the follower element (52) transmits a longitudinal movement of the shaft (110) to the transmission element (600) when the coupling protrusion (524) abuts against the first channel end (642) or the second channel end (644), driving the transmission element towards the first or second limit position, respectively; and
a control unit (250) configured for deactivating the power supply circuit upon detecting that the transmission element (600) reaches the first or second limit position.

9. The linear actuator according to any of the preceding claims, comprising a feed nut (51) coupled to the shaft (110), in particular to a channel end of the shaft (110), wherein the follower element (52) can be coupled or is coupled to the shaft by means of the feed nut (51).

10. The linear actuator according to any of the preceding claims, wherein the coupling between the follower element (52) and the shaft (110) and/or the feed nut (51) is a non-rigid coupling.

11. The linear actuator according to any of the preceding claims, wherein the control unit (250) comprises a first switch (411),
the first switch being configured for being activated when the transmission element (600), in particular a projection (650) thereof, reaches the first limit position; and
the control unit (250) being configured for deactivating the power supply circuit when the first switch (411) is activated;
wherein the first switch (411) is preferably arranged in the first limit position and configured for being activated through contact by the transmission element (600), preferably by a projection (650) thereof, when the transmission element (600) reaches the first limit position.

12. The linear actuator according to any of the preceding claims, wherein the control unit (250) further comprises a second switch (410),
the second switch being configured for being activated when the transmission element (600), in particular a projection (650) thereof, reaches the second limit position; and
the control unit (250) being configured for deactivating the power supply circuit when the second switch (410) is activated;
wherein the second switch (410) is preferably arranged in the second limit position and configured for being activated through contact by the transmission element (600), preferably by a projection (650) thereof, when the transmission element (600) reaches the second limit position.

13. The actuator according to any of the preceding claims, wherein the transmission element (600) additionally comprises a pre-tensioning system configured for pre-tensioning the transmission element (600) such that, when the coupling protrusion (524) does not abut against either of the channel ends (644, 642) or against the stroke regulator (930), the transmission element (600) is kept in a pre-tensioned neutral position between the first limit position and the second limit position.

14. A system comprising a load to be linearly displaced and at least one linear actuator according to any of the preceding claims coupled to the load.
